# EUROPEAN PATENT APPLICATION

(11) **EP 3 139 321 A1**
(43) Date of publication of application: **08.03.2017**
(21) Application number: 16153503.4
(22) Date of filing: 29.01.2016
(51) Int. Cl.: G06Q 10/06, G07F 17/32, G06Q 10/08

(54) **ANALYTICS SYSTEM AND METHOD**

(30) Priority: 04.09.2015 IN 4690CH2015
(71) Applicant: Mu Sigma Business Solutions Pvt. Ltd., 560066 Bengaluru (IN)
(72) Inventor: Vikranth, Gopi B, Chicago 60601 (US); Dowalty, Zubin, Georgetown, TN Tennessee 37336 (US); Chandra, Ankit, Noida, Uttar Pradesh - 201304 (IN); Mansukhani, Subir, 560066 Bengaluru (IN); Upadrasta, Bharat, 560032 Bangalore (IN); Bose, Mayukh, 560066 Bengaluru (IN); Avinash, Ummadisingu, 560066 Bengaluru (IN)
(74) Representative: Ström & Gulliksson AB

(57) **Abstract**

An analytics systems adapted for use in a real-time gaming environment is provided. The analytics system includes a plurality of gaming stations disposed in a plurality of locations within the gaming environment. Each gaming station includes a display zone for displaying a plurality of gaming objects. The analytics system includes at least one sensor configured to capture object data corresponding to the plurality of gaming objects displayed in the display zone. In addition, the analytics system includes at least one processor coupled to the sensor and configured to generate identification data for the plurality of gaming objects. Moreover, the analytics system also includes a multi-agent based system. Lastly, the analytics system includes a monitoring module coupled to the multi-agent based system and configured to enable a user to monitor a plurality of events occurring at each gaming station.

## Description

### BACKGROUND

The invention relates generally to analytics systems and more particularly to a system and method for managing customer interactions by using proximate objects interconnected over a network.

Typically, in an organization, quick business decisions play a vital role for the growth of the organization. Currently, business decisions are inefficient due to lack of accurate data. In present systems accurate data collection modules increase the cost of implementation. In addition, the data collection and data consumption techniques have a latency period, resulting in delayed business decisions. Business decisions are typically reliant on the quality and the speed at which data is captured and made available.

Currently, organizations use manual interventions to capture data. After the data has been manually captured, decision making is done either manually, or data is fed into a traditional EDW/Big Data store, which provides an after-the-fact insight into the business operations. For example, retailers today are paralyzed by the rate of data flowing into the enterprise and the vast array of sources, data types, data combinations, from which insights and decisions are generated. Automating the capturing and collection process of data in a natural retail environment produces more consistent, quantified, and accurate data, reducing variation and errors from manual observation and point-of-view reporting.

In another example, in casinos, the capture of real-time data from gaming tables like Blackjack, Poker or Baccarat is vital. It is often desirable to collect the real-time data with minimal latency period, so that business insights are generated in real-time. The business insights are then provided to the floor manager who can then respond to dynamic needs of the business like changing number of open gaming tables, changing the distribution of different types of games on the floor, improving dealer efficiency etc.

Therefore, a system and method is needed to automate the process of capturing, collecting and transmitting the data of real-time events across organizations.

### SUMMARY

Briefly, according to one aspect of the invention an analytics systems adapted for use in a real-time gaming environment is provided. The analytics system includes a plurality of gaming stations disposed in a plurality of locations within the gaming environment. Each gaming station includes a display zone for displaying a plurality of gaming objects. The analytics system includes at least one sensor configured to capture object data corresponding to the plurality of gaming objects displayed in the display zone. In addition, the analytics system includes at least one processor coupled to the sensor and configured to generate identification data for the plurality of gaming objects. Moreover, the analytics system also includes a multi-agent based system. The multi-agent based system includes a core engine configured to define and deploy a plurality of agents. The plurality of agents are configured to perform a set of programmable tasks defined by one or more users. The set of programmable tasks are configured to operate with the object data. The multi-agent based system also includes a monitoring engine configured to monitor a lifecycle of the plurality of agents, communication amongst the plurality of agents and a processing time of the programmable tasks. In addition, the multi-agent based system includes a computing engine coupled to the core engine and configured to execute the set of programmable tasks. Lastly, the analytics system includes a monitoring module coupled to the multi-agent based system and configured to enable a user to monitor a plurality of events occurring at each gaming station.

Briefly, according to yet one aspect of the invention an internet of things based analytics systems for improving customer experience is provided. The analytics system includes a plurality of articles of interest disposed in a plurality of locations within an establishment. Moreover, the analytics system includes at least one sensor configured to capture image data corresponding to the plurality of articles of interest. The analytics system includes at least one processor coupled to the sensor and configured to generate identification data for the plurality of articles of interest. The analytics system includes a multi-agent based system. The multi-agent based system includes a core engine configured to define and deploy a plurality of agents. The plurality of agents are configured to perform a set of programmable tasks defined by one or more users. The set of programmable tasks are configured to operate with the object data. The multi-agent based system includes a monitoring engine configured to monitor a lifecycle of the plurality of agents, communication amongst the plurality of agents and a processing time of the programmable tasks. Also, the multi-agent based system includes a computing engine coupled to the core engine and configured to execute the set of programmable tasks. Lastly, the analytics system includes a monitoring module coupled to the multi-agent based system and configured to enable a user to monitor a plurality of business parameters for the plurality of articles of interest.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a block diagram of one embodiment of an internet of things based analytics system implemented according to aspects of the present technique;
FIG. 2 is an example configuration of an internet of things based analytics system adapted for use in real-time gaming environment implemented according to aspects of the present technique;
FIG. 3 is a flow chart illustrating one method by which the gaming object such as 'playing card' is identified according to aspects of the present techniques;
FIG. 4 is a flow chart illustrating one method by which the gaming object such as 'chip' is identified according to aspects of the present techniques;
FIG. 5 is a flow chart illustrating one method by which a wide variety of business data is captured, enabled for real-time decision making based on machine learning and statistical techniques according to aspects of the present techniques; and
FIG. 6 is a flow chart illustrating one method by which real-time data about product availability from a retail outlet is captured and analyzed, according to aspects of the present techniques.

### DETAILED DESCRIPTION

The present invention provides an Internet of Things (IoT) based analytics system configured to adapt for use in an environment serving several customers. More particularly, the invention provides an analytics system for understanding and improving customer experience. The Internet of Things (IoT), also referred as Internet of Everything is the network of physical objects or "things" embedded with electronics, software, sensors, and connectivity to enable objects to exchange data with the manufacturer, operator and/or other connected devices based on the infrastructure of International Telecommunication Union's Global Standards Initiative. In particular, the Internet of Things allows objects to be sensed and controlled remotely across existing network infrastructure, creating opportunities for more direct integration between the physical world and computer-based systems, and resulting in improved efficiency, accuracy and economic benefit. Each thing is uniquely identifiable through its embedded computing system and is able to interoperate within the existing Internet infrastructure.

The internet of things based analytics systems and methods are described with example embodiments and drawings. References in the specification to "one embodiment", "an embodiment", "an exemplary embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The IoT based analytics system disclosed herein enables end-to-end capability including capturing of real-time data and recommending various scenarios to make accurate business decisions. Moreover, the IoT based analytics system captures a wide variety of business data, enables near-real time decision making based on machine learning and statistical techniques, and integrates it with customized visualization components to enable the end user to make quick and effective business decisions.

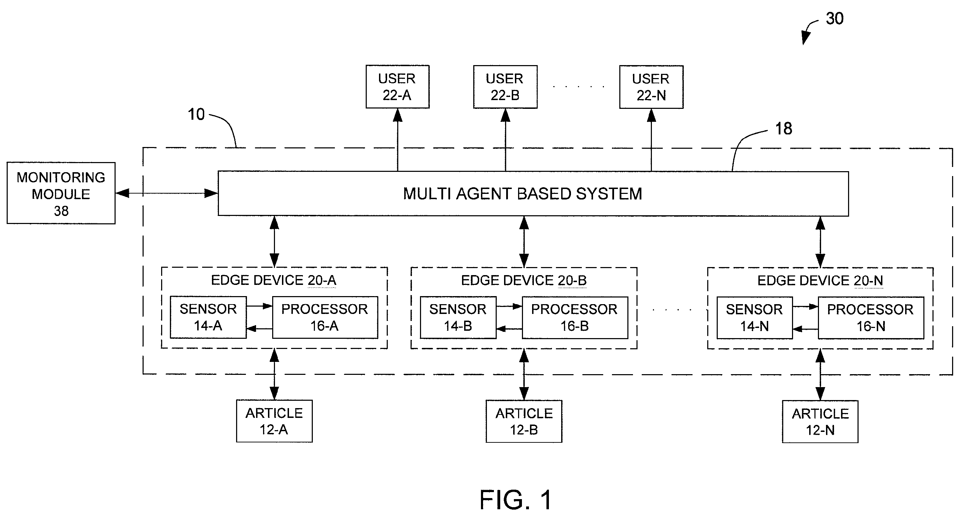

FIG. 1 is a block diagram of one embodiment of an internet of things based analytics system implemented according to aspects of the present technique. The IoT based analytics system 10 is an interconnected system including one or more edge devices 20-A through 20-N and a multi-agent based system 18. Each component is described in further details below.

Edge devices 20-A through 20-N are configured to capture real-time image data of various articles disposed in a customer space 30. As used herein, a customer space refers to physical areas within a business establishment, which is frequented by customers. In one embodiment, the establishment comprises business organizations, retail outlets, retail consumer outlets, casinos, hotels and restaurants, libraries, museums etc. The edge devices 20-A through 20-N comprises sensors 14-A through 14-N and processor 16-A through 16-N. Examples of sensors 14-A through 14-N include small and cost effective sensors like image sensor, audio sensor, heat sensor, location sensors and the like. The sensors 14-A through 14-N act as 'eyes' and 'ears' of an organization and gather real-time business operational data in a cost effective manner. The sensors 14-A through 14-N capture image data corresponding to the plurality of articles of interest.

Processor 16-A through 16-N are coupled to the corresponding sensors 14-A through 14-N respectively and are configured to identify the articles captured by the sensors. In one embodiment, processor 16-A through 16-N include an agent software abstraction module configured to deploy and manage the intelligence layer on the sensors 14-A through 14-N. In one embodiment, the agents are mobile devices and can be cloned, suspended and scaled across the entire infrastructure in real-time. In particular, the processor 16-A through 16-N generates identification data for the plurality of articles of interest.

Multi-agent based system 18 is configured to receive a set of programmable tasks defined by one or more users 22-A through 22-N. A monitoring module 38 is coupled to the multi-agent based system 18 and is configured to enable a user to monitor a plurality of business parameters for the plurality of articles of interest. As used herein, the term "user" may refer to both natural people and other entities that operate as a "user". Examples include corporations, organizations, enterprises, managers, teams, or other group of people. In this embodiment, the set of programmable tasks are configured to operate with real time data. Examples of the set of programmable tasks include real time data collected from business operations, object data corresponding to gaming objects, algorithmic trading, fraud detection, demand sensing, payments and cash monitoring, dynamic pricing and yield management, data security monitoring, supply chain optimization and the like.

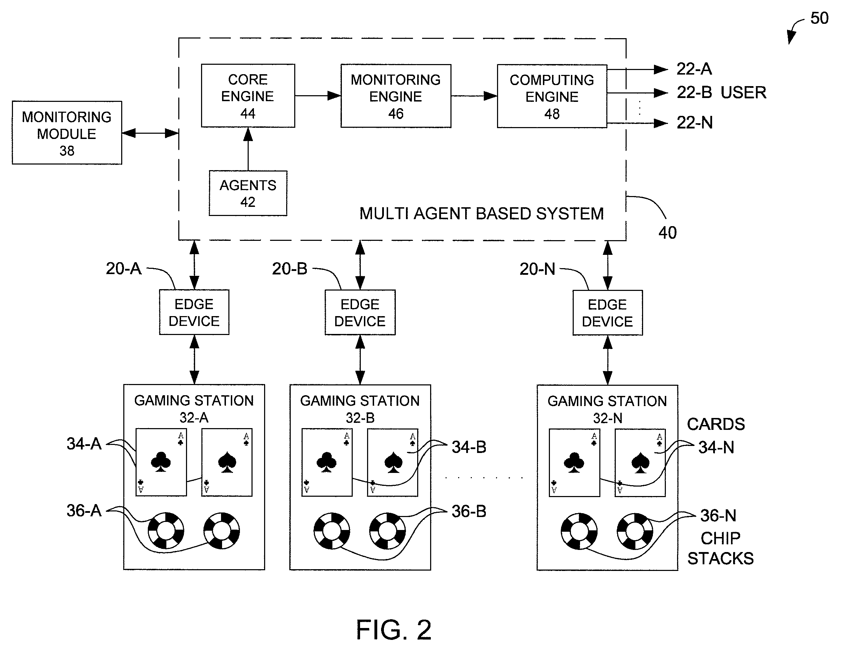

Multi-agent based system 18 comprises agents configured to represent an application defined by one or more users 22-A through 22-N. The agent is further configured to communicate with other agents deployed by the multi-agent based system. Multi-agent based system 18 performs various operations like creating and deploying the agents to perform programmable tasks and monitoring a lifecycle of the agents. In addition, the multi-agent based system 18 is configured to generate a plurality of reports enabling a user to track a plurality of patterns associated with the plurality of articles of interest. The multi-agent based system 18 is described in detail in FIG.2 below.

FIG. 2 is an example configuration of an internet of things (IoT) based analytics system adapted for use in real-time gaming environment implemented according to aspects of the present technique. The IoT based analytics system 10 is implemented in a real-time gaming environment 50 and includes a multi-agent based system 40 configured to capture data from the gaming stations 32-A through 32-N through the edge devices 20-A through 20-N. Each edge device is disposed adjacent to a corresponding gaming station. Each gaming station comprises a display zone for displaying a plurality of gaming objects. In one embodiment, the gaming station 32-A through 32-N comprises gaming objects which may include one or more playing cards 34-A through 34-N and one or more stacks of betting chips 36-A through 36-N. Each component is described in further detail below.

Multi-agent based system 40 is a real-time agent-based intelligence framework that features properties of intelligence such as perception, memory, correlation, inference, anticipation, reaction, communication and retrospection. The functionality of multi-agent based system 40 is described in detail in India patent application number 3649/CHE/2014 titled "Event Processing Systems and Methods" filed on the 25 July 2014 and is incorporated herein.

In one embodiment, the real-time gaming environment 50 is a casino and the plurality of gaming objects comprise playing cards 34-A through 34-N and stacks of betting chips 36-A through 36-N. In this embodiment, on a casino floor, the deployment of IoT based analytics system 10 can capture real-time data from gaming tables like Blackjack, Poker, Baccarat and the like.

The multi-agent based system 40 includes a plurality of agents 42, a core engine 44, a monitoring engine 46 and a computing engine 48. Core engine 44 is configured to create and deploy agents to perform a set of programmable tasks defined by one or more users 22-A through 22-N. The agents may also be selected from a predefined library of agents. Further, the core engine 44 is configured to define a functioning of an agent according to a pre-defined agent behavior. The plurality of agents are configured to perform a set of programmable tasks defined by one or more users. The set of programmable tasks are configured to operate with the object data.

Monitoring engine 46 is coupled to core engine 44 and is configured to monitor a lifecycle of the agents, communication amongst the plurality of agents and a processing time of the programmable tasks. The computing engine 48 is coupled to the monitoring engine 46 and is configured to execute the set of programmable tasks. In particular, the multi-agent based system 40 is configured to determine betting patterns, transactions on the identified chips and cards or combinations thereof. The multi-agent based system 40 further comprises a statistical suite comprising a plurality of statistical tools to process the object data. In one embodiment, the object data comprises image data of the plurality of gaming objects.

Monitoring module 38 is coupled to the multi-agent based system 40 and is configured to enable a user 22-A through 22-N to monitor a plurality of events occurring at each gaming station. The gaming stations 32-A through 32-N are coupled to the edge devices 20-A through 20-N to extract identification data corresponding to the plurality of gaming objects. In one embodiment, each edge device includes a sensor configured to capture object data corresponding to the plurality of gaming objects displayed in the display zone. In addition, each edge device includes a processor coupled to the sensor and configured to generate identification data for the plurality of gaming objects. The processor is configured to determine card suit and a card value of the playing card. In addition, the processor is configured to determine a number of chips played by one or more players at the gaming station.

Moreover, the edge devices are configured to determine a color, a shape and a number on the playing card 34-A through 34-N. The data identified and captured can be further analyzed to generate business insights in real-time. The business insight enables, for example, a gaming floor manager, to respond to dynamic needs of the business like changing number of open gaming tables, changing the distribution of different types of games on the floor and improving dealer efficiency.

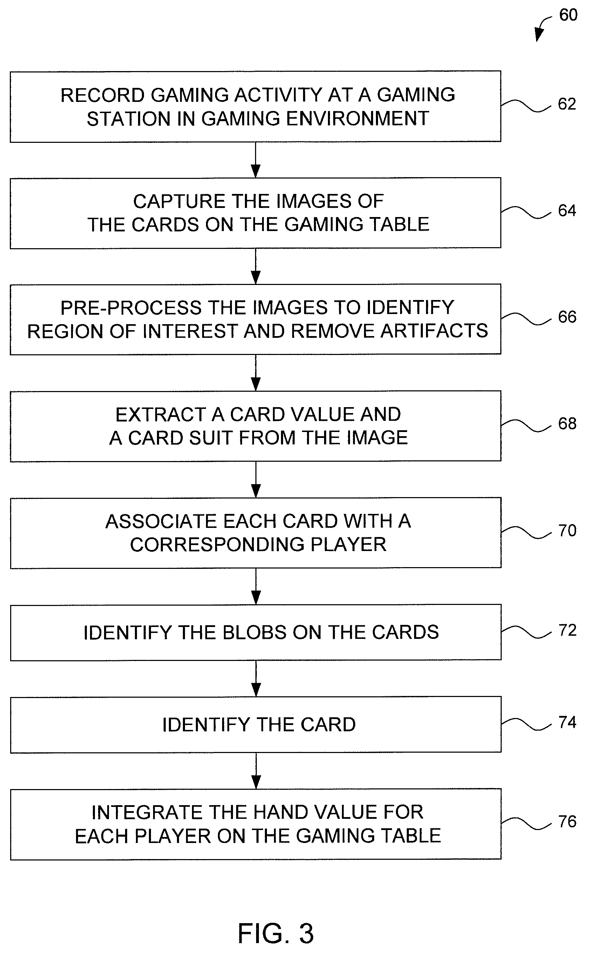

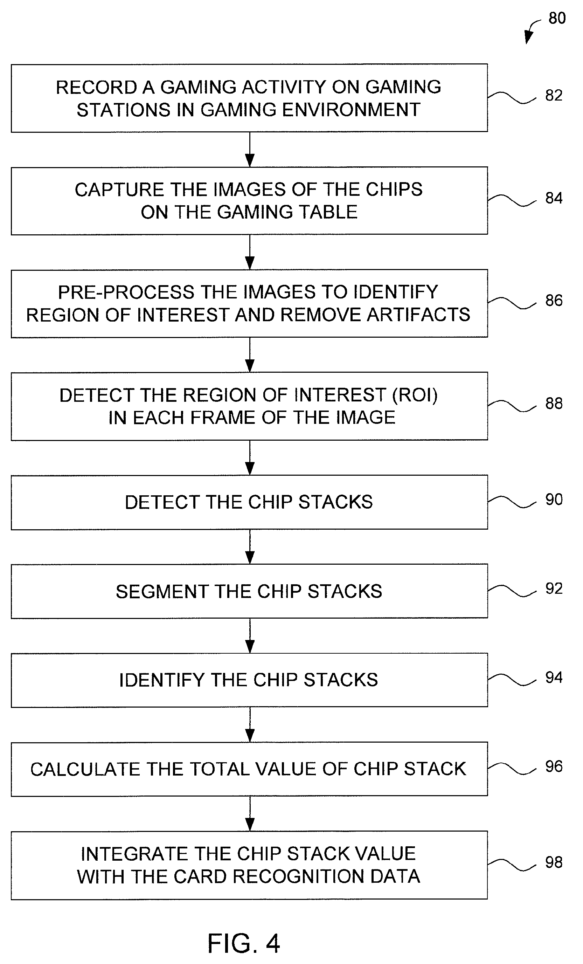

Edge devices 20-A through 20-N are deployed at optimal locations around gaming stations 32-A through 32-N to capture data related to game in progress. The edge devices 20-A through 20-N host and run agents deployed by core engine 44 to identify the playing cards 34-A through 34-N and stacks of betting chips 36-A through 36-N placed on each gaming station. The manner in which the card and chip recognition techniques are implemented is explained in detail in FIG.3 and FIG.4 below.

FIG. 3 is a flow chart illustrating one method by which a gaming object such as 'playing card' is identified according to aspects of the present techniques. In particular, the process 60 is used to detect, extract and identify playing cards that have been placed on a gaming table. The word 'card' and 'playing card' used in the description reflects same meaning. Each step is described in further detail below.

At step 62, the gaming activity at a gaming station in a gaming environment is recorded. In this example, the gaming environment is a casino and the gaming station refers to a gaming table where a few players are placing bets on a game of Blackjack. At step 64, the images of the cards on the gaming table are captured. In one embodiment, the video and/or images of the cards are recorded using one or more cameras placed at a non-intrusive location around the table.

At step 66, the images are pre-processed to identify region of interest and remove artifacts. In one embodiment, the Stable Frame Extraction technique is used to select frames that do not include hand movements of the players or the game dealer. The pre-processing step includes separation of the playing cards from the table background. In one embodiment, a strip is defined at the bottom of the gaming table and background subtraction is performed on it. The foreground mask obtained from the above steps is checked for gaming objects. The frame (of a playing card) with a certain threshold level is considered as a stable frame and directed for further processing. The frames below a certain threshold level are rejected and the above steps are repeated.

At step 68, a card value and a card suit is extracted from the image. In this embodiment, a segmentation technique is used to segment and/or extract the card value and the card suit from the image. In one embodiment, the segmentation technique is performed on a test frame and a reference frame. The test frame may or may not have cards. The reference frame is a frame (captured at the time of table initialization), which does not have any cards present. In this embodiment, the reference frame is subtracted from the test frame and the differenced image is considered as a threshold to mark out the card regions.

At step 70, each card is associated with a corresponding player to identify the bets being placed on the table by each player. In one embodiment, a card association technique is used to associate the cards to the corresponding players. In this embodiment, the existing list of contours are collected. For each active player, a player's card is taken. Otherwise, an octagon centered at the betting circle of the player is added to the list of existing contours. For each contour in the set of old contours, the closest new contour/s is/are found. If a player who was previously not active, is associated with a contour, the card contour is added to the player's hand. If an old contour is associated with a single new contour, the distances of the old contour's edges from the new contour's edges is determined. If an old contour is associated with two new contours, a split is assumed to have happened and both the new contours are added to the player's hand. The information resulted from the card association technique is the hand value for the player on the gaming table.

At step 72, the blobs on the cards are identified wherein the blobs represent the area around the card suit and the card value. In one embodiment, the blobs on the cards are identified by filtering the threshold image. The filtering of the threshold image involves removal of noise areas around the blobs which assist in easy identification of the suit. The blobs with area within a predetermined range of the card area are retained and the rest are rejected. In one embodiment, the cards are identified by applying a blob counting process and an optical character recognition (OCR) process.

The blob counting process includes masking the card out of the image and applying a bilateral filtration to the image to remove noise while preserving boundaries. Next, a minimum channel is selected for each channel and is measured using an adaptive thresholding method to convert it into a binary image. Lastly, contour detection technique is performed on the binary image to determine the contours within the card area.

The optical character recognition (OCR) process includes selecting consecutive triplets within a region of interest by iterating the corners of the card contour. Next, the sides are checked against the standard length/breadth of the card. If either length matches, points are picked along the lines at fixed lengths and the region of interest is oriented along a standard card orientation. Lastly, the ROI is then pre-processed and classified by applying a random forest digit classifier. The list of cards are returned, which is then used by the next step.

At step 76, the hand value for each player on the gaming table is integrated with the card value and the card suit. Once this data is determined the chips being played by each player on the gaming table needs to be determined. The identification of chip recognition is described in FIG. 4 below.

FIG. 4 is a flow chart illustrating one method by which the gaming object such as 'chip' is identified according to aspects of the present techniques. In particular, the process 80 is used to track the progress of a game and calculate the bets placed by each player during the course of a game. The process 80 identifies the chips (and the value) each player has betted. It may be noted that, the technique is being described with reference to a gaming station in a casino where few players are placing bets on a game of Blackjack. Each step is described in further detail below.

At step 82, a gaming activity on gaming stations in gaming environment is recorded. During the game, players bet by placing chips in the designated areas known as betting circles. The players can also place side bets by placing chips in designated areas for side bets. At step 84, the images of the chips on the gaming table are captured. In one embodiment, the video and/or images of the chips are recorded using a camera placed at a non-intrusive location around the table.

At step 86, the images are pre-processed to identify region of interest and remove artifacts. In this embodiment, the camera used to capture the video and/or image might not be stable and therefore may move intermittently. As a result, the subsequent steps might be at risk. To prevent this, a frame stabilization technique is applied after the receipt of each frame of the captured image and remove artifacts. The frame stabilization technique compares the first frame with each subsequent frame of the image captured, computes the transform similar to auto calibration but using a more lightweight Scale-invariant feature transform (SIFT) instead of affine-SIFT. This triggers every 'n' frames of the video and updates the transformation matrix. This matrix is then used to transform every frame that comes from the input source for the next 'n'.

At step 88, the region of interest (ROI) in each frame of the image is detected. In this embodiment, an auto-calibration technique is used to detect one or more regions of interest (ROI) in the frame. The ROI's are the set of betting circles corresponding to side betting circles for each player. In one example embodiment, the betting circle is the circle with a blue star on it and the side bet circle is the one adjacent to the betting circle. The betting circles and the side betting circles are marked in a reference image. In one embodiment, an Affine-SIFT algorithm is applied on the reference frame to give the precise locations of these circles.

At step 90, the chip stacks are detected. In this embodiment, for each of the player's ROI's a foreground mask is obtained by using an Adaptive Gaussian Mixture Model Background Subtractor (MOG2) technique followed by noise reducing morphological operations. Further, a set of disconnected blobs present in the ROI are obtained. A check is done to identify blobs that satisfies a number of conditions on shape, size, stability, distance, etc. If a blob that satisfies all these conditions is present, then the other blobs are eliminated. The satisfied blob is normalized, reshaped and resized to a normalized size. Further, the parts of the blob with noise are trimmed.

At step 92, the chip stacks are segmented. In this embodiment, the chip segmentation technique takes the previously normalized stack and removes the label of the top-most chip and "flatten" the entire stack out so that the stack would appear like it is being viewed from the side instead of a camera looking down at it. This is performed by identifying the topmost chip of the stack and an ellipse is fitted to the topmost chip and then further cutting that ellipse out. The chip stack is pulled up in an elliptical fashion turning the cylinder into a rectangle. The height of a single chip for this stack is estimated. This is done by making use of the transformation the betting circle has undergone. The values of the major and minor axis give information regarding the angle the camera makes with the table. The angle along with the known height of a chip in real life allows to guess the height of a single chip in the current stack. This height is then used to segment the chips in the stack.

At step 94, the chip stacks are identified. In one embodiment, each chip segment is further divided into 1 pixel high segments and then passed to a classifier. At step 96, the total value of chip stack is calculated. At step 98, the chip stack value is integrated with the card recognition data.

The integrated data from step 98 and step 76 (as described in FIG. 3) is used to calculate the different metrics for all the gaming tables. The integrated data is used to generate the insights for the entire gaming stations in the gaming environment. This data provides recommendations to one or more floor managers to optimize the business metrics. The manner in which the card identification process of FIG. 3 and the chip identification process in FIG. 4 is integrated to provide business recommendations is described in detail below.

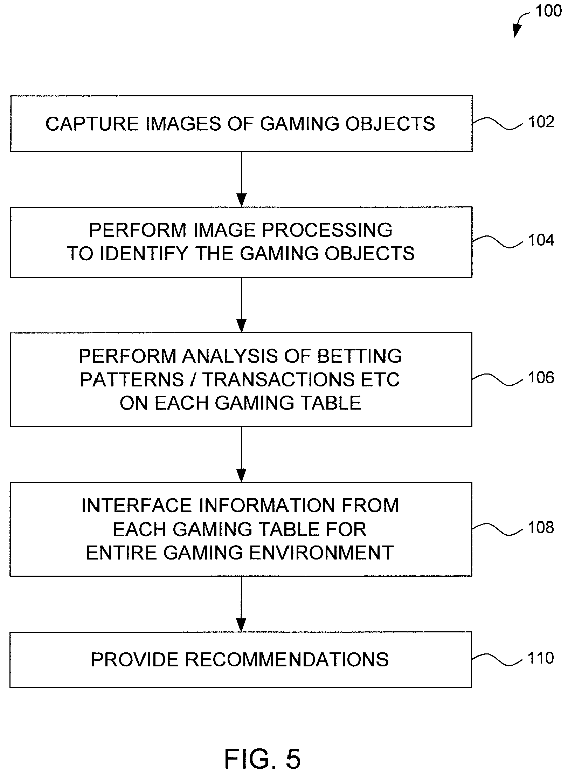

FIG. 5 is a flow chart illustrating one method by which a wide variety of business data is captured, enabled for near-real time decision making in a casino environment based on machine learning and statistical techniques according to aspects of the present techniques. In particular, the process 100 is used for capturing images of gaming objects and provide recommendations to gaming floor manager using an internet of thing (IoT) analytics system 10 described in FIG.2. Each step is described in further detail below.

At step 102, a plurality of images of gaming objects in the gaming environment are captured. In one embodiment, the gaming environment is a casino and the plurality of gaming objects comprise playing cards 34-A through 34-N and betting chip stacks 36-A through 36-N (as shown in FIG. 2). In this embodiment, on a casino floor, the deployment of IoT analytics system 10 can capture real-time data from gaming tables like Blackjack, Poker, Baccarat and the like. In this embodiment, the edge devices comprising a camera that is placed at a non-intrusive location around the table in the gaming environment is used to capture images.

At step 104, image processing is performed to identify the gaming objects. In this embodiment, the edge devices comprising processors are implemented to identify the gaming objects (for example playing cards 34-A through 34-N and betting chip stacks 36-A through 36-N). FIG. 3 and FIG. 4 describes the image processing on the chip stacks and the playing cards in detail.

At step 106, internet of things (IoT) based analytics is performed to demonstrate the betting patterns and/or transactions on the identified chips and cards placed at the gaming station. In one example embodiment, the internet of things (IoT) based analytics comprises tracking the progress of a blackjack game and calculate the bets placed by each player during the course of a game. The analysis is performed by identifying the chips (and the value) of what each player has bet. During the game, players bet by placing chips in the designated areas known as betting circles. Players can also place side bets by placing chips in designated areas for side bets. Moreover, a suite of statistical algorithms for big data analytics is used for analysis of betting patterns. In addition, customized machine learning algorithms are implemented to analyze the data captured at step 106.

At step 108, the information from each gaming table is interfaced for entire gaming environment. In one embodiment, a web interface is implemented to create, deploy and monitor the gaming information for the entire casino.

At step 110, the recommendations are provided to the gaming managers. In one embodiment, the recommendations are generated based on machine learning and statistical techniques. The recommendations generated are integrated with customized visualization components to enable the gaming managers to make quick business decisions.

The techniques described above are not limited for gaming environments such as casinos. These techniques find applications in a wide variety of businesses. Another example related to the retail sector is described in detail below.

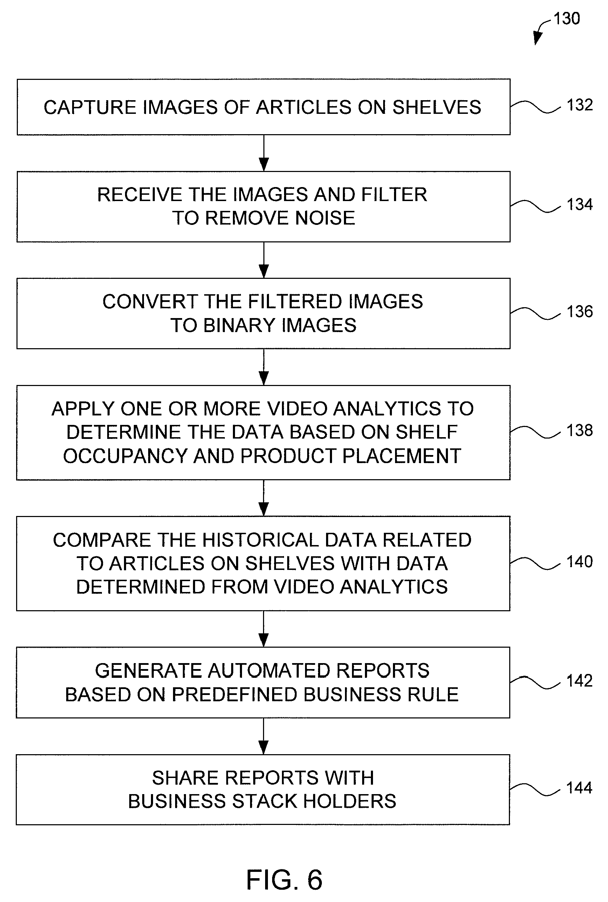

FIG. 6 is a flow chart illustrating one method by which real-time data about product availability from a retail outlet is captured and analyzed, according to aspects of the present techniques. The analysis enables near real-time decision making for retail managers overseeing the outlet. In particular, the process 130 implements an internet of thing (IoT) analytics system 10 for capturing images of articles on shelves in a retail store and provide recommendations to retail manager. Each step is described in further detail below.

At step 132, the images of articles disposed on a plurality of shelves in the retail store are captured. In one embodiment, a camera is placed in a position with a reasonable view of a set of shelves and is configured to capture the images of the articles on the shelves. It may be noted that, the camera is disposed such that there is a reasonable amount of lighting available to capture a clean good quality image. In this embodiment, the image of the articles on the shelves are captured at periodic intervals.

Camera parameters like zoom, aspect ratio etc. may be fixed or may be altered as desired. In this embodiment, an edge device (as described in FIG.2) is used to capture and beam images of retail shelves. Mobile camera & mobile edge device may also be implemented for the capturing of images of articles on shelves. In one embodiment, the edge device includes a sensor configured to capture object data corresponding to the plurality of articles of interest. For example, the plurality of articles of interest comprises plurality of consumer products disposed on a plurality of shelves in the retail outlet. The object data comprises image data of the plurality of consumer products disposed on the plurality of shelves in the retail outlet.

At step 134, the images are received from the cameras and are filtered to remove noise. In one embodiment, a comparison is performed on the frames to filter out the images which contain noise. At step 136, the filtered images are converted to binary images. The (binary images) processed data is then moved from edge platform to the central repository. In this embodiment, the processor coupled to the sensor is configured to generate identification data for the plurality of articles of interest. In addition, the processor is configured to track the on shelf availability in the retail outlet and identify different product labels present on the shelf.

At step 138, video analytics technique is applied on the processed data to determine the data based on shelf occupancy and product placement. In one embodiment, one or more video analytics techniques like edge detection, contour detection and the like are implemented to determine the shelf occupancy and product placements. At this step, data from several sources like historical data, Point-of-Sale and Planogram are obtained.

At step 140, the historical data related to articles on shelves are compared with the data determined from video analytics. In one embodiment, the images of articles on shelves in a retail store is analyzed to differentiate between products displayed on the shelf. Further, the images can be analyzed to track the on shelf availability in the retail environment and identify different product labels present on the shelf. Also, the images can be analyzed to identify if an individual consumer product is out of stock.

At step 142, automated reports and alerts are generated based on predefined business rules. In one embodiment, a multi-agent based system (as described in FIG.1 and FIG. 2) is used to receive a set of programmable tasks related to operations in the retail outlet (typically defined by one or more outlet managers, supervisors and the like) and is configured to operate with real-time data that is received from step 142. In one embodiment, the multi-agent based system is configured to determine stock patterns, selling patterns, product restocking data, managing check-out queues by opening new counters, tracking a customer's path inside the retail outlet. Moreover, the multi-agent based system further comprises a statistical suite comprising a plurality of statistical tools to process the object data.

At step 144, the reports and alerts generated are shared with the business stack holders. In one embodiment, the triggered data is a real-time data that enables real-time decision making like restocking a product, managing check-out queues by opening new counters, tracking a customer's path inside the retail store and/or combinations thereof.

For example, the IoT based analytics system provides accurate real-time alerts about stocking levels of each shelves (products preferably). Moreover, the user interface implemented to track the on shelf availability in the retail environment is adaptive and compatible with several platforms such as mobile devices on Android, IOS, Windows mobile 10 and/or combinations thereof. All alerts & reports are supported on desktop and mobile (preferably web based).

In addition, the IoT analytics system 10 includes an on shelf availability feature which is configured to identify out of stock rate and product historical analysis and metrics. The on shelf availability feature also provides retail managers with a dashboard view having real time metrics and charts that capture a store level information. Likewise, on shelf availability feature also provides a scheduler for tasks for the real time update of the requirement and real time alerts of the processes running in the background for the requirement.

This invention has the potential to impact retailers at various economic levels, specifically in improving sales, retail margins, marketing ROI, customer experience, inventory turns and many more. The invention tries to address the concern of business decisions in several types of business organization. Moreover, the invention helps to capture and analyze the real-time data at either cost prohibitive manner, or have an inherent latency which limits the business impact.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present.

For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations).

While only certain features of several embodiments have been illustrated and described herein, many modifications and changes will occur to those skilled in the art. It is, therefore, to be understood that the appended claims are intended to cover all such modifications and changes as fall within the true spirit of the invention.

## Claims

1. An analytics system adapted for use in a real-time gaming environment, the analytics system comprising:
a plurality of gaming stations disposed in a plurality of locations within the gaming environment; each gaming station comprising a display zone for displaying a plurality of gaming objects;
at least one sensor configured to capture object data corresponding to the plurality of gaming objects displayed in the display zone;
at least one processor coupled to the sensor and configured to generate identification data for the plurality of gaming objects;
a multi-agent based system comprising:
a core engine configured to define and deploy a plurality of agents;
wherein the plurality of agents are configured to perform a set of programmable tasks defined by one or more users; wherein the set of programmable tasks are configured to operate with the object data;
a monitoring engine configured to monitor a lifecycle of the plurality of agents, communication amongst the plurality of agents and a processing time of the programmable tasks;
a computing engine coupled to the core engine and configured to execute the set of programmable tasks; and
a monitoring module coupled to the multi-agent based system and configured to enable a user to monitor a plurality of events occurring at each gaming station.

2. The analytics system of claim 1, wherein the real-time gaming environment is a casino and the plurality of objects comprises playing cards and betting chips.

3. The analytics system of claim 1, wherein the object data comprises image data of the plurality of gaming objects.

4. The analytics system of claim 1, wherein the multi-agent based system is configured to determine betting patterns, transactions on the identified chips and cards or combinations thereofs.

5. The analytics system of claim 1, wherein the processor is configured to determine a card suit and a card value of the playing card.

6. The analytics system of claim 1, wherein the processor is configured to determine a number of chips played by one or more players at the gaming station.

7. The analytics system of claim 1, wherein the multi-agent based system further comprises a statistical suite comprising a plurality of statistical tools to process the object data.

8. An internet of things (IoT) based analytics systems for improving customer experience, the analytics system comprising:
a plurality of articles of interest disposed in a plurality of locations within an establishment;
at least one sensor configured to capture object data corresponding to the plurality of articles of interest;
at least one processor coupled to the sensor and configured to generate identification data for the plurality of articles of interest;
a multi-agent based system comprising:
a core engine configured to define and deploy a plurality of agents;
wherein the plurality of agents are configured to perform a set of programmable tasks defined by one or more users; wherein the set of programmable tasks are configured to operate with the object data;
a monitoring engine configured to monitor a lifecycle of the plurality of agents, communication amongst the plurality of agents and a processing time of the programmable tasks;
a computing engine coupled to the core engine and configured to execute the set of programmable tasks; and
a monitoring module coupled to the multi-agent based system and configured to enable a user to monitor a plurality of business parameters for the plurality of articles of interest.

9. The internet of things (IoT) based analytics system of claim 8, wherein the multi-agent based system is configured to generate a plurality of reports enabling a user to track a plurality of patterns associated with the plurality of articles of interest.

10. The internet of things (IoT) based analytics system of claim 8, wherein the establishment comprises business organizations, retail outlets, retail consumer outlets, casinos, hotels and restaurants, libraries, museums or combinations thereof.

11. The internet of things (IoT) based analytics system of claim 8, wherein the plurality of articles of interest comprises plurality of consumer products disposed on a plurality of shelves in the retail outlet.

12. The internet of things (IoT) based analytics system of claim 11, wherein the object data comprises image data of the plurality of consumer products disposed on the plurality of shelves in the retail outlet.

13. The internet of things (IoT) based analytics system of claim 8, wherein the multi-agent based system is configured to determine stock patterns, selling patterns, product restocking data, managing check-out queues by opening new counters, tracking a customer's path inside the retail outlet.

14. The internet of things (IoT) based analytics system of claim 11, wherein the processor is configured to track the on shelf availability in the retail outlet and identify different product labels present on the shelf.

15. The internet of things (IoT) based analytics system of claim 8, wherein the multi-agent based system further comprises a statistical suite comprising a plurality of statistical tools to process the object data.
